(19) Europäisches Patentamt / European Patent Office / Office européen des brevets

(11) **EP 2 525 303 A1**

(12) **EUROPEAN PATENT APPLICATION**

(43) Date of publication:
    **21.11.2012 Bulletin 2012/47**

(51) Int Cl.:
    **G06K 9/32** (2006.01)        **G06K 9/00** (2006.01)
    **G06T 7/20** (2006.01)

(21) Application number: **11166367.0**

(22) Date of filing: **17.05.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Natroshvili, Koba**<br>**76337, Waldbronn (DE)**<br><br>(74) Representative: **Sticht, Andreas**<br>**Kraus & Weisert**<br>**Patent- und Rechtsanwälte**<br>**Thomas-Wimmer-Ring 15**<br>**80539 München (DE)** |
| (71) Applicant: **Harman Becker Automotive Systems GmbH**<br>**76307 Karlsbad (DE)** | |

(54) **Lane tracking**

(57)    Methods and devices for tracking lanes are provided. Kalman filtering is used to update estimate of parameters describing the lane course based on an image captured by a camera (21).

**Fig. 2**

EP 2 525 303 A1

**Description**

Technical Field

This application relates to the detection and tracking of lanes, in particular lane markings, on streets.

Background

For various driver assistance applications, it is desirable to determine the course of a lane, a car is currently on. A lane, in this respect, may be one of a plurality of lanes in case a particular road has more than one lane, or may essentially be the same as the entire street in case of single lane roads. Lanes are usually marked by lane markings like white continuous or discontinuous stripes.

Determining the course of a lane is for example useful for autonomous driving applications where the car for example may be equipped to follow a particular lane automatically without the need of a driver actuating a steering wheel or the like, or for example also for driving assistance systems warning the driver when he is about to reach a boundary of the lane the car is currently on.

Lane markings can in principle be captured using a camera. However, a single camera by its nature produces a two-dimensional image, while the lane markings are situated in three-dimensional space. Therefore, methods and devices are needed capable of detecting and tracking a lane, in particular lane markings, on the basis of such two-dimensional images.

Summary

This need is met by a method and a device as defined in the independent claims. The dependent claims define further embodiments.

According to a first aspect, a method for tracking a lane is provided, comprising:

providing a first estimate of parameters describing the lane course,
providing a second estimate of error covariances of the parameters of the first estimate,
applying Kalman filtering to the first estimate and the second estimate to repeatedly provide new first estimates and new second estimates based on measurement data comprising at least one image of a road comprising the lane.

The use of Kalman filtering enables an efficient updating of the first estimate of parameters describing the lane course for example as the car moves along the lane, and based on the parameters then the lane course is known at least as an estimate.

The applying of Kalman filtering in an embodiment may be performed independent of further measurement data in addition to the at least one image of the road. In other embodiments, additional measurement data like a measurement data of a steering wheel angle or measurement data of a car velocity may additionally be used.

The applying of Kalman filtering may comprise the steps of computing a Kalman gain, updating the first estimate based on the measurement data, updating the second estimate and calculate new first and second estimates. These steps may be performed repeatedly.

In an embodiment, the calculation of new first and second estimates comprises the calculation of an approximated error covariance matrix. The approximation may comprise applying a Van Loan algorithm.

In some embodiments, a relation between positions of the lane, particular lane markings, in the image and position of the lane, in particular the lane markings, in three-dimensional space is determined based on a projection matrix, a translation matrix and at least one rotation matrix.

According to another embodiment, a device is provided, comprising:

a camera, and
a processor unit, the processor unit being configured to repeatedly provide first estimates of parameters describing the course of a lane and second estimates for error covariances of the parameters describing the lane by applying Kalman filtering based on measurement data comprising at least one image of the road comprising the lane provided by the camera.

The device may comprise an input for receiving measurement data from additional sensors like a velocity sensor or a steering angle sensor and to apply the Kalman filtering also based on such additional measurement inputs.

The device, in particular the processor unit, may be configured to perform any of the above defined methods.

Features of the above described embodiments may be combined with each other unless noted otherwise.

Brief description of the drawings

The foregoing and other features of embodiments will become more apparent from the following detailed description of embodiments when read in conjunction with the accompanying drawings.

Fig. 1 shows a schematic diagram of a vehicle on a lane for explaining various variables and terms used in the specification.

Fig. 2 is a schematic block diagram of a device according to an embodiment.

Fig. 3 is a flow-chart of a method according to an embodiment.

Fig. 4 is a schematic diagram for illustrating a coordinate conversion employed in some embodiments.

Detailed description

Embodiments of the invention will be described in detail hereinafter. It should be noted that features of embodiments described may be combined with each other unless noted otherwise. On the other hand, the described embodiments are not to be construed as limiting. In particular, describing an embodiment with a plurality of features is not to be construed as indicating that all those features are necessary for practicing the invention, as other embodiments may e.g. comprise less features or alternative features.

Embodiments described hereinafter relate to tracking of a lane, in particular lane markings, using Kalman filtering, in particular extended Kalman filtering.

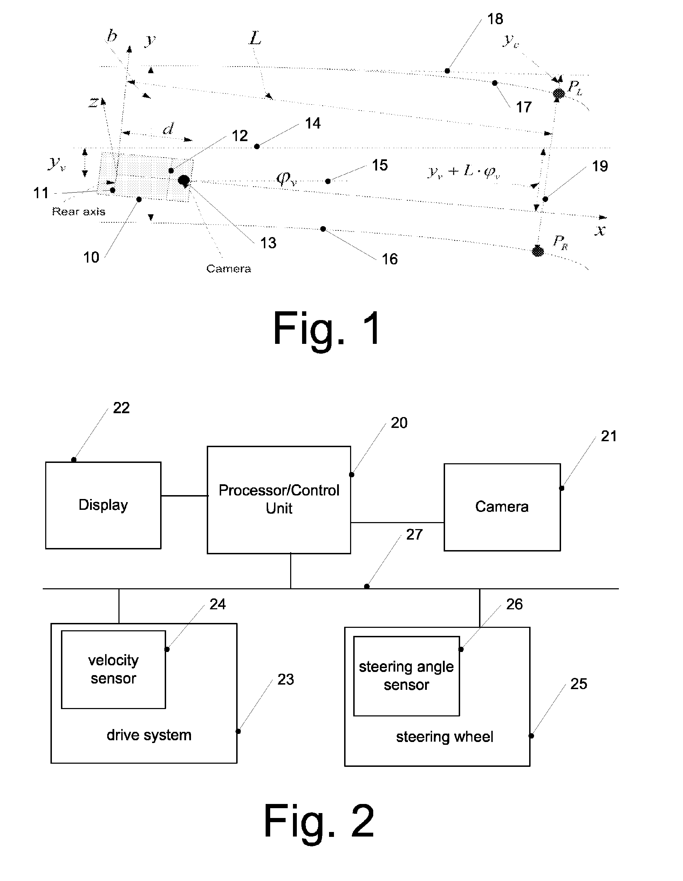

For the detailed description that follows, first of all with reference to Fig. 1 various variables and terms used in the following will be explained.

In Fig. 1, a car 10 is schematically shown on a lane delimited by lane markings 16, 17. A middle axis of the car corresponds to the x-axis, and a y-axis is perpendicular thereto and intersects the x-axis at a rear axis 11 of car 10. The z-axis is perpendicular to the x-axis and the y-axis and forms a right handed three-dimensional coordinate system therewith. 12 denotes the front axis of the car. Furthermore, car 10 is equipped with a camera 13. While car 10 will be used as an example in the following, it should be appreciated that the invention is also applicable to other vehicles like trucks, busses or motorcycles.

Dotted line 18 represents a tangent to lane boundary 17 at the position of car 10, and dotted line 14 is a parallel to dotted line 18 in the middle of the lane at the position of the car. Dotted line 15 is parallel to dotted lines 15 and 18 starting from a middle of a front of car 10.

$\varphi v$ is the angle between the car axis, i.e. the x-axis, and dotted line 15. As the position and direction of the lane, and therefore the lane boundaries 16, 17, may change continuously, this angle is not necessary equal to the steering angle of the car, i.e. the angle of the wheels, which will be denoted $\varphi st$ hereinafter.

Camera 13 is positioned in the car a distance d away from the rear axis, i.e. at a position (d,0) in the coordinate system shown in Fig. 1. $y_v$ denotes a distance between the central longitudinal axis of the car, i.e. the x-axis, and dotted line 14, i.e. the middle of the lane. b denotes a width of the lane. L is a range of observing the lanes, for example a range of camera 13. $P_L$ and $P_R$ are points on the lane boundaries 17 and 16, respectively, i.e. on the left and right lane boundaries. Dotted line 19 connects the points $P_L$ and $P_R$. The distance between an intersection of dotted line 14 and dotted line 19 and an intersection between the x-axis and line 19 is approximately equal to $y_v + L \cdot \varphi v$ provided that $\varphi v$ is small.

In the following, the course of the lane boundaries 16, 17 will be described by a Clothoid. The curvature C of the Clothoid is the inverse of the radius of curvature of R of the Clothoid, i.e. C = 1/R, and is approximated as

$$C = C_0 + C_1 \cdot 1 \qquad\qquad (1)$$

wherein $C_0$, $C_1$ will be referred to as Clothoid curvature parameters and 1 is a length within a segment, $C_0$ and $C_1$ being constant in each segment, i.e. piecewise constant.

As piecewise constant parameters imply abrupt changes and this generally makes modelling a system more difficult, in the following average values will be used. Furthermore, in the following it is assumed that the road is flat, which in most cases is a good approximation. The average horizontal parameter $C_0$ will be denoted $C_{0hm}$, and the average horizontal parameter $C_1$ will be denoted $C_{0hm}$. The changes of the thus average Clothoid parameters can be given with the following differential equations:

$$\dot{C}_{ohm} = \dot{C}_{1hm} \cdot V$$

$$\dot{C}_{1hm} = -\frac{3V}{L} C_{1hm} \cdot V + \frac{3V}{L} C_{1h} \qquad (2)$$

$$\dot{C}_{1h} = n_{c1h}(t)$$

A dot on top of the quantities indicates a derivative with respect to time. V is the velocity e.g. of the car 10 of Fig. 1.

$n_{c1h}(t)$ is a function of time, which depends on the actual course of the lane.

When the driver follows a lane, which is the usual case, the following equations are valid:

$$\dot{\lambda} = k_{\lambda} \cdot U$$

$$\dot{y}_v = V \cdot \varphi_v \qquad . \qquad (3)$$

$$\varphi_v = \frac{V}{a} \cdot \lambda - V \cdot C_{0h}$$

$\lambda$ is the head angle relative to the longitudinal axis of the car (x-axis in Fig. 1), $k_{\lambda}$ is a constant and U is the power steering wheel angle. a is the distance between the vehicle wheel axes, i.e. between front wheel and rear wheel.

Equations (2) and (3) can be rewritten in matrix form as

$$
\begin{pmatrix} \lambda \\ y_v \\ \varphi_v \\ C_{0hm} \\ C_{1hm} \\ C_{1h} \\ b \\ V \end{pmatrix}'
=
\begin{pmatrix}
0 & 0 & 0 & 0 & 0 & 0 & 0 & 0 \\
0 & 0 & V & 0 & 0 & 0 & 0 & \varphi_v \\
\frac{V}{a} & 0 & 0 & -V & 0 & 0 & 0 & \frac{\lambda}{a} - C_{ohm} \\
0 & 0 & 0 & 0 & V & 0 & 0 & C_{1hm} \\
0 & 0 & 0 & 0 & -\frac{3V}{a} & \frac{3V}{a} & 0 & -\frac{3}{L}(C_{1hm} - C_{1h}) \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{pmatrix}
\cdot
\begin{pmatrix} \lambda \\ y_v \\ \varphi_v \\ C_{0hm} \\ C_{1hm} \\ C_{1h} \\ b \\ V \end{pmatrix}
\qquad (4)
$$

The vector is the state vector and the' on the left side of equation (4) designates the derivative with respect to time. To repeat, in the state vector $\lambda$ is the car wheels head angle relative to the longitudinal car axis, $y_v$ is the offset of the car with respect to the middle axis of the road (dotted line 14 in Fig. 1), $\varphi v$ is the car steering angle relative to the road, $C_{0hm}$ is the Clothoid curvature as an average value, $C_{1hm}$ is the average value of the road curvature change, $C_{1h}$ is the momentary road curvature change, b is the width of the lane and V is the velocity of the car.

In embodiments described in the following in more detail, the above state vector or, in some cases, a different state vector or parts thereof are determined, in particular the Clothoid parameters $C_{0hm}$, $C_{1hm}$ and $C_{1h}$, which describe the course of lane markings and therefore a lane and consequently enable tracking of a lane. A device according to an embodiment is shown in Fig. 2.

The device of the embodiment shown in Fig. 2 comprises a processor unit 20, which may for example be part of a general control unit of a car or other vehicles, but which may also be a separate processor unit, a camera 21 for recording images of the road and corresponding for example camera 13 of Fig. 1, and optionally a display 22 for displaying results to a driver. Furthermore, the device of Fig. 2, in particular processor/control unit 20, has an input for a bus 27, for example a CAN bus of a car. Via bus 27, processor/control unit 20 may receive further measurement data in addition to the images recorded by camera 21, for example velocity data from a velocity sensor 24 of a drive system 23 of the car or other vehicle or a steering angle from a steering angle sensor 26 coupled to a steering wheel 25 of the car or other vehicle.

In the embodiment of Fig. 2, processor/control unit 20 continuously receives images from camera 21 and determines the course of a lane, for example by determining the above mentioned state vector, using Kalman filtering. Embodiments of implementations of such Kalman filtering will be described in the following.

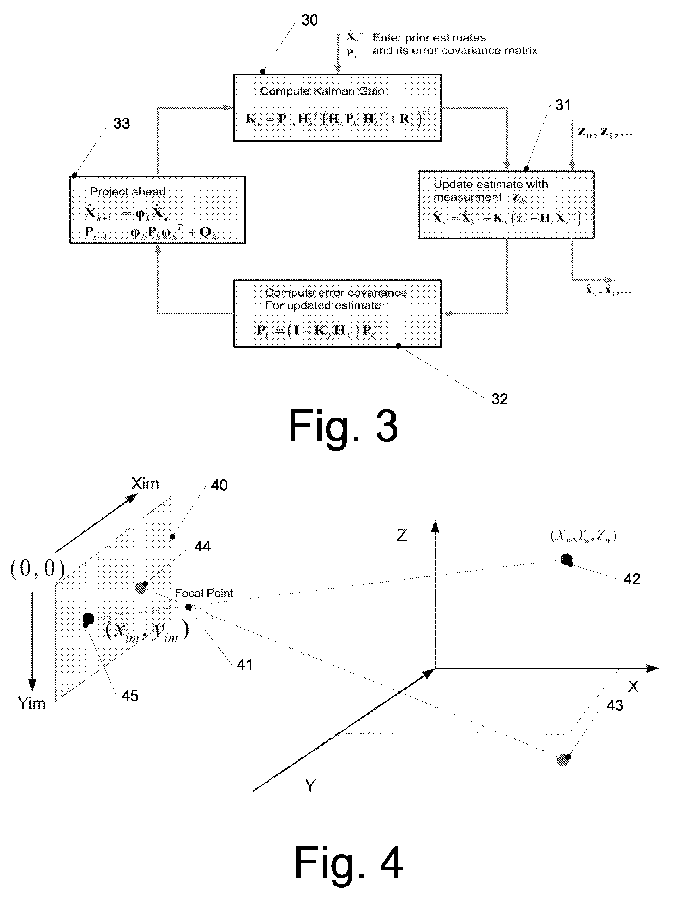

In Fig. 3 a flow chart illustrating an example of a method of an embodiment employing Kalman filtering is shown.

In the Kalman filter shown in Fig. 3, a vector $\hat{X}$ is first updated based on measurements and then "projected ahead" for the next iteration. In a similar manner, an error covariance matrix associated with the vector $\hat{X}$ labeled **P** is updated and projected ahead. An exponent "-" denotes quantities prior to the update based on measurements. An index generally denoted k starts with 0 and increments by 1 in each "iteration" of the filter.

Initially, a first estimate $\hat{X}_0^-$ , for example initial values for the above-mentioned state vector, and corresponding initial values for an error covariance matrix $P_0^-$ are provided. These initial values can for example be provided by guessing or by taking typical values for a road. For example, the lane width b can be given a typical value like 3.3 m, the position and orientation of the car ($y_v$, $\varphi_v$) may be taken to be in the middle of the road, V may be taken at or near zero or a typical speed and the Clothoid parameters may either be given a fixed value by some try and error or by analyzing an initial image delivered by camera 21 where lane markings are identified and a line fitting is done. The line detection can be done for example by using a Hough transformation (Radon transformation) and/or a gradient detection and filtering the lane angles based on a histogram. Based on such a fitting also the angles $\varphi_v$ and the value $y_v$ can be estimated. Other starting velocities may also be used. In other embodiments, a starting value of V is taken from a sensor like velocity sensor 24 of Fig. 2.

At 30, a Kalman gain $\mathbf{K}_k$ ($\mathbf{K}_0$ in the first iteration) is calculated according to

$$K_k = P^-{}_k H_k^T (H_k P_k^- H_k^T + R_k)^{-1} \tag{5}$$

**H** is the so-called measurement matrix, which creates a relation between a state vector **x** and a measurement vector which will be explained later in greater detail and which is denoted **z** according to

$$\mathbf{z} = \mathbf{H} \cdot \mathbf{x} + \mathbf{v}$$
$$\mathbf{z}_{k+1} = \mathbf{H}_k \cdot \mathbf{x}_k + \mathbf{v}_k \tag{6}$$

Wherein the first line of the above equation is the continuous form and the second line the discrete form and wherein $\mathbf{v}_k$ is a noise vector. It should be noted that the above equation (6) strictly speaking is for a linear case, while the present tracking of lanes is a non-linear problem. Therefore, what is used in embodiments of the invention is the so-called extended Kalman filter, where the problem is linearized and corresponding Jacobian matrixes are used, which will be explained later.

**R** in equation (5) is a measurement error covariance matrix.

At 31, the estimated state vector $\hat{X}_k^-$ is then updated based on a current measurement $\mathbf{z}_k$, for example a captured image for example captured by camera 21, based on

$$\hat{X}_k = \hat{X}_k^- + K_k (z_k - H_k \hat{X}_k^-) \tag{7}$$

The exponent $^T$ denotes the transposed matrix, while the exponent $^{-1}$ denotes the inversed matrix.
The updated estimates are output as current values as also indicated in Fig. 3, i.e. continuously updated values $\hat{X}_0, \hat{X}_1$ etc. are output.
At 32, the error covariance matrix $\mathbf{P}_k$ is updated according to

$$P_k = (I - K_k H_k) P_k^-  \qquad (8)$$

Finally, at 33 the values for **X** and **P** are "projected ahead", i.e. estimates for the next iteration are prepared according to

$$\hat{X}_{k+1}^{\ -} = \varphi_k \hat{X}_k$$
$$P_{k+1}^{\ -} = \varphi_k P_k \varphi_k^T + Q_k \qquad (9)$$

wherein $\varphi_k$ is the so-called state transformation matrix and $\mathbf{Q}_k$ is the so-called process noise covariance matrix. The state transformation matrix relates to neighbouring state vectors, for example $\mathbf{x}_{k+1}$ and $\mathbf{x}_k$, according to

$$\dot{\mathbf{x}} = \mathbf{F} \cdot \mathbf{x} + \mathbf{G} \cdot \mathbf{u} + \mathbf{w}$$
$$\mathbf{x}_{k+1} = \boldsymbol{\varphi}_k \cdot \mathbf{x}_k + \mathbf{G}_k \cdot \mathbf{u}_k + \mathbf{w}_k \qquad (10)$$

wherein **u** is a control vector, **G** is a control input model, **w** is a noise element and **F** is a matrix which for the state vector above corresponds to the matrix given in equation (4).
Examples for determining $\varphi$ and **Q** in some embodiments of the invention will be described in the following.
In particular, for determining $\varphi_k$ and $\mathbf{Q}_k$, the following matrix is generated:

$$\mathbf{A} = T \cdot \begin{pmatrix} -\mathbf{F} & \mathbf{GWG}^T \\ \mathbf{0} & \mathbf{F}^T \end{pmatrix} \qquad (11)$$

wherein F is the state transformation matrix in continuous form, i.e.

$$\mathbf{F} = \begin{pmatrix} 0 & 0 & 0 & 0 & 0 & 0 & 0 & 0 \\ 0 & 0 & V & 0 & 0 & 0 & 0 & \varphi_v \\ \dfrac{V}{a} & 0 & 0 & -V & 0 & 0 & 0 & \dfrac{\lambda}{a} - C_{ohm} \\ 0 & 0 & 0 & 0 & V & 0 & 0 & C_{1hm} \\ 0 & 0 & 0 & 0 & -\dfrac{3V}{a} & \dfrac{3V}{a} & 0 & -\dfrac{3}{L}\left(C_{1hm} - C_{1h}\right) \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{pmatrix} \tag{12}$$

in the example of the state vector given above.

T is the sampling time. The matrix **GWG** contains process noise elements. In practice it is a diagonal matrix and contains process noise variances.

Based on the matrix **A** a matrix **B** is calculated according to

$$B = Exp(A) \tag{13}$$

where the function **Exp** is the matrix exponential function. The result in discrete form is

$$\mathbf{B}(t_k) = \begin{pmatrix} \cdots & \cdots \\ \mathbf{C}_k & \boldsymbol{\varphi}_k \end{pmatrix} \tag{14}$$

wherein $t_k$ is the time corresponding to iteration k of Fig. 3.

From this result, $\varphi_k$ can be directly be taken, and $\mathbf{Q}_k$ may be calculated according to

$$\mathbf{Q}_k = T \cdot \boldsymbol{\varphi}_k \cdot \mathbf{C}_k \tag{15}$$

wherein T again is the sampling time.

With the above explained method, a rather precise determination of $\varphi_k$ and $\mathbf{Q}_k$ is possible. However, in some cases the calculation of the matrix exponent according to equation (13) may consume significant computation resources. Therefore, in some embodiments an approximation is used.

In particular, between the state transformation matrix and state transition matrix the following relationship exists

$$\boldsymbol{\varphi}_k = e^{\mathbf{F}(t_k) \cdot T} \tag{16}$$

**F** being the matrix of equation (12). For the exponential term, a linear approximation may be used according to

$$\boldsymbol{\varphi}_k = e^{\mathbf{F}(t_k)\cdot T} = \mathbf{I} + \mathbf{F}(t_k)\cdot T \tag{17}$$

wherein **I** is the unity matrix (values of 1 in the diagonal and 0 elsewhere).

To approximate $\mathbf{Q}_k$ then equation (15) is used where the matrix $\mathbf{T}_k$ is substituted by a constant matrix $\mathbf{C}_{Const}$ which may be calculated using the so-called Van-Loan method. In other words, $\mathbf{Q}_k$ is calculated according to

$$\mathbf{Q}_k = T \cdot \boldsymbol{\varphi}_k \cdot \mathbf{C}_{Const} \qquad . \tag{18}$$

Therefore, above methods have shown how the matrixes $\varphi_k$ and $\mathbf{Q}_k$ for the implementation of the embodiment of Fig. 3 can be obtained.

Next, it will be explained how the matrix **H** of the embodiment of Fig. 3 (which in the non-linear case as mentioned is a Jacobian matrix) or, in other words, how a relationship between the state vector to be obtained and measurements made can be calculated. In an embodiment, the elements measured are coordinates of lane marking points on the recorded image, which may be written as a measurement vector **z** of Fig. 3. In other words, a lane marking may be identified in the image, and one or more points on the lane marking may then be used, like points $P_L$ and $P_R$ of Fig. 1. In embodiments, different numbers of such points may be used in the measurement vector, for example four points on the left lane marking, four points on the right lane marking or any other number greater than zero. Additionally, as will be explained later and has been already mentioned with respect to Fig. 2, the measurement vector can contain additional measurements like a velocity measurement or a steering angle measurement.

In Fig. 1, the y-coordinate $y_{PL}$ of the point $P_L$, and the y-coordinate $y_{PR}$ of the point $P_R$, can be calculated according to

$$y_{PL} = \frac{b}{2} + y_c - y_v - L \cdot \varphi_v$$

$$y_{PR} = -\frac{b}{2} + y_c - y_v - L \cdot \varphi_v \tag{19}$$

wherein $y_c$ is an offset of the Clothoid describing the course of the lane marking from a straight line and can be calculated according to

$$y_c = \frac{(L+d)^2}{2} \cdot C_{ohm} + \frac{(L+d)^3}{6} \cdot C_{1hm} \tag{20}$$

In embodiments, the length L is chosen to be in a range where the Clothoid changes, i.e. the deviations from for example line 18 are comparatively small. In such embodiments, the x-coordinate of the points $P_L$ and $P_R$, i.e. $x_{PL}$ and $x_{PR}$, may be approximated by L.

The above equations (19) and (20) link the coordinates of the points $P_L$ and $P_R$ in the "real world" with elements of the state vector.

However, the measurement is made as a two-dimensional image in embodiments. Therefore, a relationship between the real world coordinates and the positions in the two-dimensional image taken by an image sensor for example by camera 21, are needed.

To explain how such a relationship can be obtained, in Fig. 4 a simple example for a pinhole camera is shown. The pinhole camera may serve as an approximation for other kinds of cameras in some embodiments. In other embodiments, a more complex optic than a pinhole camera may be considered.

In Fig. 4, as an example two points 42, 43 in a three-dimensional space denoted by axis X, Y and Z forming a right handed coordinate system are given. The coordinates of point 42 are for example $(X_w, Y_w, Z_w)$. These points are captured by an image sensor 40, 41 denoting the focal point, in case of a pinhole camera the location of pinhole. 45 denotes a point corresponding to the projection of point 42 on image sensor 40 and 44 denotes a point corresponding to the projection of point 43 on image sensor 40. The coordinates of the point on the image sensor are labelled $X_{im}$, $Y_{im}$.

The projection from three-dimensional space onto the two-dimensional image sensor may be described using translation, rotations and a perspective projection according to

$$\begin{pmatrix} X_{im} \\ Y_{im} \\ Z_{im} \end{pmatrix} = R_p \cdot T \cdot R_x \cdot R_y \cdot R_z \cdot \begin{pmatrix} L \\ y_{PR,L} \\ 0 \\ 1 \end{pmatrix} \quad (21)$$

According to for the case that the three-dimensional point is a point on the lane marking with x-coordinate L and y-coordinate either $y_{PR}$ or $y_{PL}$ as explained above. The z-coordinate is 0, and the fourth coordinate set to 1 is commonly used in projections. Please note that for the two-dimensional projection, $Z_{im}$ is 0.

In equation (21), $R_p$ is a projection matrix, T is a translation matrix, and $R_x$, $R_y$ and $R_z$ are rotation matrixes. $X_{im}$, $Y_{im}$ and $Z_{im}$ in equation (21) are the so-called image homogeneous coordinates.

The projection matrix $R_p$ in the example of Fig. 4 is equal to

$$R_p = \begin{pmatrix} c_x - f_x & 0 & 0 \\ c_y & 0 & -f_y & 0 \\ 1 & 0 & 0 & 0 \end{pmatrix} \quad (22)$$

wherein $f_{x,y}$ and $c_{x,y}$ are constants depending on the geometry.

The result of the multiplication of the (constant) matrixes in equation (21) is denoted with A in the following, not to be confused **A** of equation (11):

$$A = R_p \cdot T \cdot R_x \cdot R_y \cdot R_z \quad (23)$$

The matrix A may be calculated or determined once when setting up the system, for example calculated based on camera calibration parameters or determined based on test measurements. If camera calibration parameters, i.e. the camera setup, does not change, A stays constant.

The homogeneous coordinates based on equations (19), (20), (21) and (23) may then be calculated as

$$X_{im} = A_{11} \cdot L + A_{12} \cdot \left( \pm \frac{b}{2} + y_c - y_v - L \cdot \varphi_v \right) + A_{14} = N_{1L,R}$$

$$Y_{im} = A_{21} \cdot L + A_{22} \cdot \left( \pm \frac{b}{2} + y_c - y_v - L \cdot \varphi_v \right) + A_{24} = N_{2L,R} \qquad (24)$$

$$Z_{im} = A_{31} \cdot L + A_{32} \cdot \left( \pm \frac{b}{2} + y_c - y_v - L \cdot \varphi_v \right) + A_{34} = D_{L,R}$$

From equation (24) the non-homogeneous coordinates, i.e. the two-dimensional coordinates in the image, may be obtained according to

$$x_{bL,R} = \frac{X_{im}}{Z_{im}} = \frac{N_{1L,R}}{D_{L,R}}$$

$$(25),$$

$$y_{bL,R} = \frac{Y_{im}}{Z_{im}} = \frac{N_{2L,R}}{D_{L,R}}$$

Wherein $x_{bL,R}$ and $y_{bL,R}$ are the non-homogeneous coordinates for the left and right lane markings, respectively.
Based on the above equations, now the matrix H necessary for the implementation of the Kalman filter of Fig. 3 which is given in equation (6) may be calculated as a Jacobian matrix. Generally, the Jacobian matrix is defined as

$$\mathbf{H} = \frac{\partial \mathbf{z}}{\partial \mathbf{x}} = \begin{bmatrix} \dfrac{\partial z_1}{\partial x_1} \dfrac{\partial z_1}{\partial x_2} \cdots \\ \dfrac{\partial z_2}{\partial x_1} \dfrac{\partial z_2}{\partial x_2} \cdots \\ \cdot \\ \cdot \end{bmatrix} \qquad (26)$$

wherein **z** is the measurement vector and **x** is the state vector. Taking as measurement vector the non-homogeneous coordinates of equation (25) and as state vector the vector introduced with equation (4), the matrix **H** is

$$H =$$

$$\frac{1}{D_L^2}\begin{bmatrix} 0,-A_{12}D_L+A_{32}N_{1L}-L\cdot(A_{12}D_L-A_{32}N_{1L}),\frac{(L+d)^2}{2}(A_{12}D_L-A_{32}N_{1L}),\frac{(L+d)^3}{6}(A_{12}D_L-A_{32}N_{1L}),0,+0.5\,A_{12}D_L-A_{32}N_{1L},0 \\ 0,-A_{22}D_L+A_{32}N_{2L}-L\cdot(A_{22}D_L-A_{32}N_{2L}),\frac{(L+d)^2}{2}(A_{22}D_L-A_{32}N_{2L}),\frac{(L+d)^3}{6}(A_{22}D_L-A_{32}N_{2L}),0,+0.5\,A_{22}D_L-A_{32}N_{2L},0 \end{bmatrix}$$

or

$$=$$

$$\frac{1}{D_R^2}\begin{bmatrix} 0,-A_{12}D_R+A_{32}N_{1R}-L\cdot(A_{12}D_R-A_{32}N_{1R}),\frac{(L+d)^2}{2}(A_{12}D_R-A_{32}N_{1R}),\frac{(L+d)^3}{6}(A_{12}D_R-A_{32}N_{1R}),0,-0.5\,A_{12}D_R+A_{32}N_{1R},0 \\ 0,-A_{22}D_R+A_{32}N_{2R}-L\cdot(A_{22}D_R-A_{32}N_{2R}),\frac{(L+d)^2}{2}(A_{22}D_R-A_{32}N_{2R}),\frac{(L+d)^3}{6}(A_{22}D_R-A_{32}N_{2R}),0,-0.5\,A_{22}D_R+A_{32}N_{2R},0 \end{bmatrix}$$

$$(27)$$

Where the first alternative is for the left lane marking and the second alternative is for the right lane marking.

Therefore, based on the above information, in particular equation (27) the extended Kalman filter of Fig. 3 can be implemented for a case where only the image coordinates are measurements.

In a different embodiment, as already explained with reference to Fig. 2 additional measurements may be received from the vehicle where the system is incorporated like velocity, steering wheel angle, or also steering angle change or distance the car has travelled. In the following, it will be explained how velocity and steering angle change can be incorporated into the Kalman filter. It is assumed that no error is made in the velocity measurement, i.e. the velocity V is sufficiently accurate such that no specific treatment of errors thereof is necessary.

For the car steering angle change the following equation can be used:

$$\dot{\phi}_v = \frac{v}{a}\lambda - VC_{oh}$$
$$\dot{\phi}_v = \dot{\phi}_{st} - VC_{oh}$$

$$(28)$$

wherein $\phi_{st}$ is the car head angle in relation to inertial coordinates, i.e. the coordinate system of Fig. 1, and $\phi_v$ as defined in Fig. 1 is the car head angle relative to a road central axis.

In such a case, equation (4) is replaced by

$$\begin{bmatrix} y_v \\ \phi_v \\ Coh \\ C_{1hm} \\ C_{1n} \\ b \end{bmatrix}' = \begin{bmatrix} 0 & V & 0 & 0 & 0 & 0 \\ 0 & 0 & -V & 0 & 0 & 0 \\ 0 & 0 & 0 & V & 0 & 0 \\ 0 & 0 & 0 & \frac{-3V}{2} & \frac{-3V}{2} & 0 \\ 0 & 0 & 0 & 0 & 0 & 0 \\ 0 & 0 & 0 & 0 & 0 & 0 \end{bmatrix}\begin{bmatrix} y_v \\ \phi_v \\ Coh \\ C_{1hm} \\ C_{1n} \\ b \end{bmatrix} + \begin{bmatrix} 0 \\ \phi_{st} \\ 0 \\ 0 \\ 0 \\ 0 \end{bmatrix}'$$

$$(29)$$

It should be noted that in this case the state vector has only six elements, as $\lambda$ and V are now directly known from measurements. Otherwise, the principles employed for the Kalman filtering are the same as described above.

It should be noted that the projecting ahead of the Kalman filter of Fig. 2 may also aid in performing the measurements, for example for narrowing an area in the image where the image is analyzed to find lane markings.

The above embodiments serve only as examples. Moreover, it should be noted that many of the equations above have been given in matrix form as this a convenient form to write equations. However, the corresponding calculations for implementing embodiments need not explicitly done in matrix calculations, but the corresponding calculations may also be performed without using matrix notation.

**Claims**

1.  A method for tracking a lane, comprising:

    providing a first estimate of parameters describing the lane course,
    providing a second estimate for error covariances of said parameters, and
    applying Kalman filtering to the first and second estimates to repeatedly provide new first and second estimates based on measurement data comprising at least one image of the road comprising the lane.

2.  The method of claim 1, wherein applying Kalman filtering comprises computing a Kalman gain, updating the first and second estimates based on the measurements and calculating the new estimates based on the updated estimates.

3.  The method of claim 2, wherein said calculating of new estimates is performed based on a state transformation matrix which is obtained based on a linear approximation of an exponential of a state transition matrix.

4.  The method of claim 3, wherein said calculating of new first and second estimates is performed based on a process noise covariance matrix obtained based on the state transformation matrix and a constant matrix.

5.  The method of any one of claims 1-4, wherein said measurement data is independent of measurements of properties of a vehicle.

6.  The method of any one of claims 1-4, wherein said measurement data comprises at least one of a steering angle change, a steering angle, a speed and a distance.

7.  The method of any one of claims 1-6, wherein said Kalman filtering comprises determining a Jacobian matrix.

8.  The method of claim 7, wherein determining of said Jacobian matrix comprises using a relationship between three-dimensional coordinates and coordinates in said image.

9.  The method of any one of claims 1-8, wherein said parameters describing the lane course comprise Clothoid parameters.

10. A device for tracking a lane, comprising:

    a camera to record images of a road comprising the lane, and
    a processor unit, wherein the processor unit is provided to apply Kalman filtering to a first estimate of parameters describing the lane course and a second estimate for error covariance of said parameters to repeatedly provide new first and second estimates based on measurement data comprising at least one image recorded by the camera.

11. The device of claim 10, further comprising a measurement input for receiving measurement data from a vehicle.

12. The device of claim 10 or claim 11, wherein the device is configured to perform the method of any one of claims 1-9.

# Fig. 1

# Fig. 2

30

$\dot{X}_c^-$ Enter prior estimates
$P_c^-$ and its error covariance matrix

Compute Kalman Gain

$$K_k = P_k^- H_k^T \left( H_k P_k^- H_k^T + R_k \right)^{-1}$$

31

$z_0, z_1, \ldots$

33

Project ahead

$$\hat{X}_{k+1}^- = \varphi_k \hat{X}_k$$
$$P_{k+1}^- = \varphi_k P_k \varphi_k^T + Q_k$$

Update estimate with
measurment $z_k$

$$\hat{X}_k = \hat{X}_k^- + K_k \left( z_k - H_k \hat{X}_k^- \right)$$

Compute error covariance
For updated estimate:

$$P_k = \left( I - K_k H_k \right) P_k^-$$

$\hat{x}_0, \hat{x}_1, \ldots$

32

# Fig. 3

Xim

40

44

$(0,0)$

Z

$(X_w, Y_w, Z_w)$

42

Focal Point

$(x_{im}, y_{im})$

41

45

X

43

Yim

Y

# Fig. 4

## EUROPEAN SEARCH REPORT

Application Number

EP 11 16 6367

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL BAER ET AL: "Multiple track 4D-road representation", INTELLIGENT VEHICLES SYMPOSIUM (IV), 2010 IEEE, IEEE, PISCATAWAY, NJ, USA, 21 June 2010 (2010-06-21), pages 319-324, XP031732266, ISBN: 978-1-4244-7866-8 * II.A, III.A- III.C, specifically equations (1)-(9). Also IV. *<br>----- | 1-12 | INV.<br>G06K9/32<br>G06K9/00<br>G06T7/20 |
| X | Ljubo Vlacic, M. Parent, Fumio Harashima: "Intelligent Vehicle Technologies: Theory and Applications (Automotive Engineering Series)", 6 January 2002 (2002-01-06), A Butterworth-Heinemann Title; illustrated edition edition, XP002661605, ISBN: 9780750650939 pages 134-148, * pages 134-136 *<br>----- | 1 | |
| X | DAVID BETAILLE ET AL: "Creating Enhanced Maps for Lane-Level Vehicle Navigation", IEEE TRANSACTIONS ON INTELLIGENT TRANSPORTATION SYSTEMS, IEEE, PISCATAWAY, NJ, USA, vol. 11, no. 4, 1 December 2010 (2010-12-01), pages 786-798, XP011336963, ISSN: 1524-9050, DOI: 10.1109/TITS.2010.2050689 * page 789, specifically column 1, last paragraph and column 3, third paragraph. *<br>----- | 1 | TECHNICAL FIELDS SEARCHED (IPC)<br><br>G06K<br>G06T |
| X | JP 2008 249639 A (MITSUBISHI ELECTRIC CORP) 16 October 2008 (2008-10-16) * 0033-0034 and 0043 *<br>-----<br>-/-- | 1 | |

The present search report has been drawn up for all claims

| Place of search | Date of completion of the search | Examiner |
|---|---|---|
| The Hague | 20 October 2011 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 16 6367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/008648 A2 (AUTOMOTIVE SYSTEMS LAB [US]) 22 January 2004 (2004-01-22) * abstract * ----- | 1 | |
| X | US 2005/225477 A1 (CONG SHAN [US] ET AL) 13 October 2005 (2005-10-13) *  35-42,  130-141 * ----- | 1 | |
| X | US 2003/001732 A1 (FURUSHO HIROYUKI [JP]) 2 January 2003 (2003-01-02) *  0075- 0081 * ----- | 1 | |
| X | TSOGAS M ET AL:  "Combined lane and road attributes extraction by fusing data from digital map, laser scanner and camera", INFORMATION FUSION, ELSEVIER, US, vol. 12, no. 1, 1 January 2011 (2011-01-01), pages 28-36, XP027298786, ISSN: 1566-2535 [retrieved on 2010-01-18] * abstract and page 30, column 1, second paragraph and equation (4) * ----- | 1 | |
| X | US 6 292 752 B1 (FRANKE UWE [DE] ET AL) 18 September 2001 (2001-09-18) * abstract and Figure 1 * ----- | 1 | TECHNICAL FIELDS SEARCHED (IPC) |
| X | US 6 978 037 B1 (FECHNER THOMAS [DE] ET AL) 20 December 2005 (2005-12-20) * abstract * ----- | 1 | |
| A | DE 101 27 034 A1 (OPEL ADAM AG [DE]; VITRONIC DR ING STEIN BILDVERA [DE]) 5 December 2002 (2002-12-05) ----- | 1 | |
| A | DE 10 2009 024131 A1 (DAIMLER CHRYSLER AG [DE]) 21 January 2010 (2010-01-21) ----- | 1 | |

The present search report has been drawn up for all claims

| Place of search | Date of completion of the search | Examiner |
|---|---|---|
| The Hague | 20 October 2011 | Versluis, Anton |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 11 16 6367

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2011

| Patent document cited in search report | | Publication date | Patent family member(s) | | Publication date |
|---|---|---|---|---|---|
| JP 2008249639 | A | 16-10-2008 | NONE | | |
| WO 2004008648 | A2 | 22-01-2004 | AU | 2003251943 A1 | 02-02-2004 |
| | | | CN | 1668938 A | 14-09-2005 |
| | | | EP | 1537440 A2 | 08-06-2005 |
| | | | JP | 2005539288 A | 22-12-2005 |
| | | | JP | 2010280378 A | 16-12-2010 |
| US 2005225477 | A1 | 13-10-2005 | US | 2008183419 A1 | 31-07-2008 |
| US 2003001732 | A1 | 02-01-2003 | JP | 3729095 B2 | 21-12-2005 |
| | | | JP | 2003016430 A | 17-01-2003 |
| US 6292752 | B1 | 18-09-2001 | DE | 19749086 C1 | 12-08-1999 |
| | | | EP | 0915350 A2 | 12-05-1999 |
| | | | JP | 11265442 A | 28-09-1999 |
| US 6978037 | B1 | 20-12-2005 | DE | 10059895 A1 | 08-05-2002 |
| DE 10127034 | A1 | 05-12-2002 | NONE | | |
| DE 102009024131 | A1 | 21-01-2010 | NONE | | |

EPO FORM P0459

For more details about this annex : see Official Journal of the European Patent Office, No. 12/82